Europäisches Patentamt

(19) European Patent Office

Office européen des brevets

(11) Publication number: **0 033 915**
**A1**

(12) # EUROPEAN PATENT APPLICATION

(21) Application number: 81100680.8

(22) Date of filing: 30.01.81

(51) Int. Cl.³: **G 06 F 13/00**

(30) Priority: 07.02.80 IT 1974680

(71) Applicant: Honeywell Information Systems Italia S.p.A.,
Servizio Brevetti Honeywell Information Systems Italia
Via ai Laboratori Olivetti, I-20010 Pregnana Milanese
(Milano) (IT)

(43) Date of publication of application: 19.08.81
Bulletin 81/33

(72) Inventor: Zulian, Ferruccio, Via P. Micca, 14,
I-20010 Cornaredo (MI) (IT)

(84) Designated Contracting States: DE FR GB

(54) Method for releasing common memory resources in a multiprocessor system.

(57) A method for releasing common memory resources in an multiprocessor system where several processors can concurrently accede to common memory resources and a processor which gains access to a common memory resource set the said resource busy by storing an information indicating the busy state of the resource in a memory position related to the resource.

If during the use of such resource the processor actually using the resource runs out of service for any reason (fault, error) the used resource risks to remain busy in permanence and to be unaccessible by the other processors.

To prevent this deadlock, a common resource is set busy by storing a code which identify the processor that accedes to the resource in addition to the busy state information.

When another processor interrogates the memory to obtain access to the resource and finds it is busy, it recognizes the name code of the processor which set the resource busy in order to test its state.

If the processor which set the resource busy is inactive, or out of service for any reason, the interrogating processor can release the resource and set it in its turn.

## Method for releasing common memory resources in a multiprocessor system

The present invention relates to a method for releasing common memory resources in a multiprocessor system and more particularly to a method by which a processor in a multiprocessor system can release a common memory resource occuped by another processor which ran out of service leaving occuped the common memory resource.

It is known that in modern data processing systems several processors accede to a common memory unit.

The access operation is not simultaneous but it takes place by occupation cycles distributed in the time and assigned to the several processors according to suitable priority criteria.

Generally the memory occupation by a processor occurs on the basis of an elementary access cycle which corresponds to a memory cycle, within which a read or write operation or a combined read-write operation can be executed.

When a memory unit includes some sets of data which can be used and processed by several processors, it is necessary to avoid that the processings executed by the several processors interfere each other. The following example will make clear the meaning of such interferences. Suppose that a set of data constituting a warehouse inventory is stored in a memory unit and that several processors can record inputs/ outputs which occur in the different places of the warehouse.

When a product A goes out in quantity B from the warehouse through a door checked by processor C, processor C must update the inventory. Therefore it accedes to the memory and finds by means of read operations the information associated to product A among which there is the quantity D lying into the warehouse.

At this point processor C has to execute the operation $D' = D - B$ for determining the real warehouse stock after the leaving of quantity B and to accede again to the memory for cancelling the previous information D and replacing it with D'. If in the meantime the same product A has gone out in a quantity E from the warehouse through a second door checked by a processor F and such processor intends to update the inventory ad accesses the memory before processor C has completed its operations, processor F will find in memory information D instead of information D' and on such basis it will calculate an information $D'' = D - E$. At the end of the access operations to memory by the two processors, the information recorded into memory will be D' or D'' according to whether the last processor accessing the memory was C or F. On the contrary the correct updated datum is evidently $D''' = D - (B + E)$ or $D''' = D' - E$ too.

Therefore the operations of the two processors interfere each other and cause wrong results.

Several methods have been suggested to avoid such inconvenient.

Among the most used ones there is a method which makes use of a so-called "Test & Set" instruction; such method is described, for instance, in the "IBM System/370 Principles of Operation" manual 1970/72, 73 page 148, with reference to a multiprogramming system but also applicable to a multiprocessor system.

It is stated that "common resources" is named that particular memory zone including a set of information which can be used by several processors or by several different programs concurrently handled; besides a memory can include several common resources.

According to the mentioned method a word is associated to a common re source, for instance in the first addressable memory position belonging to the common resource; into such word an information of free or busy resource is written.

Such information consists of an only bit.

When the bit is at logical level 1, the common resource is busy; when it is at logical level 0, the common resource is free.

Such bit is named lock bit.

When a processor wants to access a memory common resource, first of all it commands a read (Test) and write (Set) operation of the first addressable memory position belonging to the common resource.

The write command imposes to set the lock bit to logical level 1.

The combined read and write operation in an only uninterruptable memory cycle is allowed, as known, with no particular artifices, by the intrinsic features of the magnetic core memory used in past times and by the more recent MOS memories currently used.

In fact, in such memories, the read operation destroys the information and always requires the subsequent writing of the pre-existing information in case it must be saved.

It is clear that, if the lock bit already was at logical level 1, the subsequent writing does not modify but, on the contrary, saves the pre-existent information.

The lock bit read out from the memory position is examined by the processor which commanded the Test & Set Operation and, if it was 0, the processor is sure to have accessed the previously free resources and to have occuped them.

If the lock bit was 1, the processor is informed that the common resource was already busy.

In the first case the processor can execute other read-write operations on the resource it occuped, in the second one it must wait for

0033915

- 4 -

the resource release.

The resource release takes place by means of a RESET TEST & SET command, that is by means of a write operation which lowers the lock bit to logical level 0.

The mentioned method for interference elimination in the access to the common resources has the inconvenient that the common resources can be locked for an indefinite time owing to faults, wrong working and errors which put the occupying processor off duty.

Such inconvenient is also present in the other methods used untill now. This causes, soon or later, the locking of most of the system activities or of the whole system.

The present invention objective is to obviate to such inconvenient.

According to a first aspect of the invention such objective is achieved by associating to each common resource, besides the lock bit, another information which enables to identify the processor which occuped that resource, that is the processor name.

So it is possible for each processor which tries to access a common resource, finding it busy, to detect which is the occupying processor and to verify if such processor is really working or if it is off duty.

According to another aspect of the invention, the processor name is associated to the lock bit in the same addressable memory position so as to be read and written together with the lock bit with a read/write operation only.

In this way it is possible to use an intrinsic feature of the currently used memories without having to apply for multiple special cycles of memory with all the resulting unavoidable circuital complications.

According to a further aspect of the invention the "Test and Set" operation, by means of which a common resource is occuped by a processor, is conditioned as regards its Set part (that is the writing) by the pre-existent status of the lock bit.

In such way it is granted that a "Test and Set" operation on already occuped resources does not modify the name of the occupying processor previously recorded into the resource.

According to a further aspect of the invention, such conditioning of the "Test and Set" operation is performed by extremely simple circuital means directly supplied into the memory unit.

These features and advantages of the invention will appear more clearly from the following description of a preferred embodiment of the invention and from the attached drawings where:

Figure 1 shows in block diagram a multiprocessor system architecture.

Figure 2 shows the organization of a memory common resource according to the invention.

Figure 3 shows in block diagram a preferred embodiment of the memory according to the invention.

Figure 4 Shows in a timing diagram the operation of the memory block included in the memory of fig. 3.

Figure 5 shows the format of a CONDITIONED TEST & SET instruction according to the invention.

Figure 6 shows in a timing diagram the operation of the memory shown in figure 3.

Figure 7 is the flow diagram of a preferred control process using the conditioned Test & Set instruction.

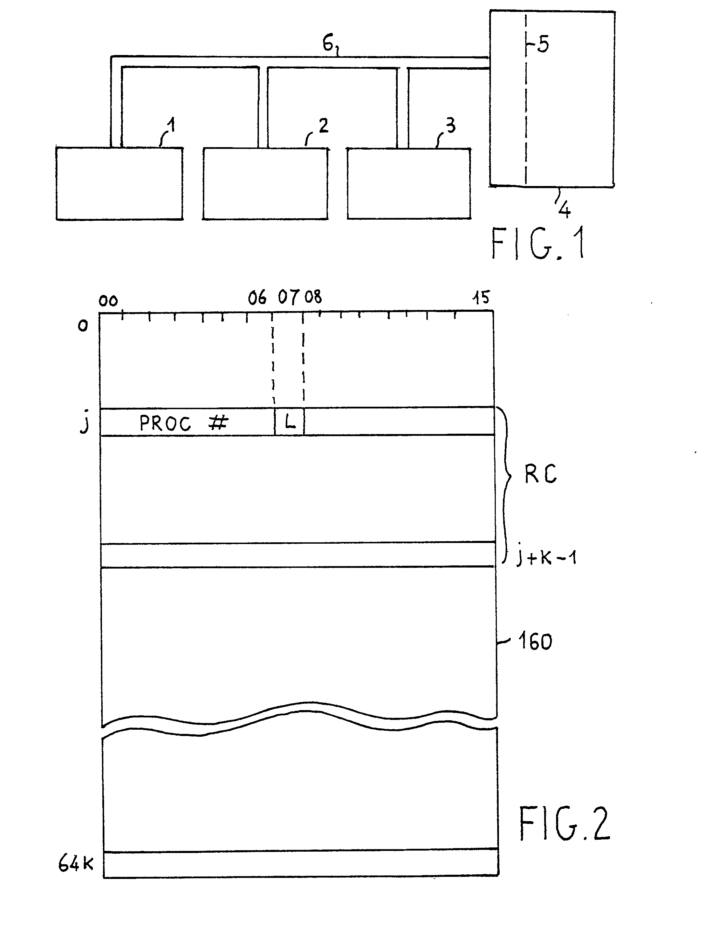

Figure 1 shows in block diagram the architecture of a multiprocessor system.

The system consists of three units or processors 1, 2, 3 (generally N processors) and a working memory 4 to which a memory access controller GAM 5 is coupled.

The different units 1, 2, 3 and GAM 5 are interconnected by means of a common system bus 6 comprising a suitable number of leads.

The system bus allows for the information transfer from any processor to the working memory and vice versa.

The information transfer can be started by any processor in asynchronous way and involves bus occupation for the time required by the transfer.

The function of GAM 5 is to settle the conflicts among several processors which want to occupy the bus at the same time and allow bus access to one processor at a time according to appropriate priority criteria.

When a processor has got bus access, it can use it to address memory 4 and to write an information in this last, or to read out an information, or to execute a combined memory read/write operation.

Essentially a bus occupation cycle and a memory cycle overlap.

At the end of a bus occupation cycle, GAM 5 assigns the bus to the same processor previously using it or to another processor according to suitable priority criteria.

Each bus occupation cycle develops through the exchange of several signals between a processor and GAM 5.

Italian Patent Application N. 29453 A/78, filed by the same assignee on November 11, 1978, describes in detail the features of a preferred embodiment of dialogue and assignment of bus occupation cycles between processor and memory.

Italian Patent Application N. 27787 A/79, filed by the same assignee on December 3, 1979, describes in detail a preferred embodiment of processor intercommunication in a multiprocessor system through the use of common memory resources.

The last mentioned patent application gives a further example of memory common resource use: each processor which wants to send messages to another system processor, instead of directly communicating such messages to the concerned processor, stores them in a processor table PRTi, that is a memory zone devoted to the concerned processor and ac cessible to all the processors.

Then the concerned processor can read the content of such table, that is the messages intended for it, by means of memory access operations. In this case too, the interference among processors which want to access the common resource must be avoided.

As all these aspects are supported by a large existing pertinent literature and by the mentioned patent applications and as they are not essential for understanding the invention, any detail is omitted about the dialogue method between processors and memory, the relative timings and the circuits which realize them.

We will only consider the aspects essential for understanding the invention and the description of a preferred embodiment.

Figure 2 shows the organization of a common memory resource according to the invention.

Block 160 represents the physical space of memory, that is the set of the addressable memory positions where some information can be stored. In figure 2 physical space of memory is constituted for instance by 64K addressable memory positions.

A memory word, constituted by a certain number of memory cells, corresponds to each addressable memory position.

The number of cells of each memory word determines the memory parallelism.

For instance in Figure 2 the parallelism is 16.

Tne memory space includes at least a common resource RC, that is a memory zone between two address j and j+k-1 which constitute respectively the initial and the final address of the resource.

In preference, but not necessarily, the first address word of the common resource is used to store a locking information of the resource.

For instance bit 07 of the word, evidenced with L, states, when at logical level 0, that the resource is available and, when at logical le vel 1, that the resource is busy, that is one of the processors is using such resource.

This feature is already known in the prior art.

However according to the invention, the first word of address j comprises a second information, represented for instance by the logical level of bits from 00 to 06 which express in binary form the code or identification number of the processor occupying the resource.

This information is evidenced in figure 2 by the expression PROC ≠.

It is clear that each processor has its own identification code different from the one of the other processors.

When a processor wants to occupy the resource RC, it addresses memory position j and, by means of a TEST & SET operation, rises bit L to logical level 1 and writes in bits 00-06 its identification code.

When a processor wants to free the resource RC that it has previously occuped, it addresses memory position j, commands a RESET TEST & SET operation and lowers to logical level 0 all the bits in such memory position.

Because of the adding of processor code PROC ≠ to the lock bit L in the same memory position, any processor, which accesses memory for verifying resource RC status by a TEST & SET operation, is informed both of the state of the resource and of the possible processor name which has already occuped the resource.

However a conventional TEST & SET operation, executed on a word constituted by a lock bit and a processor code which jointly indicate that the resource is busy, causes the read operation to be followed by a write one.

Such write operation modifies the pre-existent information and replaces the name of the processor which has already occuped the resource with the name of a new processor which executes the TEST & SET operation, but, finding the resource busy, cannot occupe it in its turn.

Such inconvenient must be absolutely avoided.

To this purpose the whole execution of the TEST & SET operation is conditioned by the pre-existent status of the common resource indicated by the lock bit.

According to another aspect of the invention, such conditioning is performed by logical and circuital elements provided in the memory for this purpose.

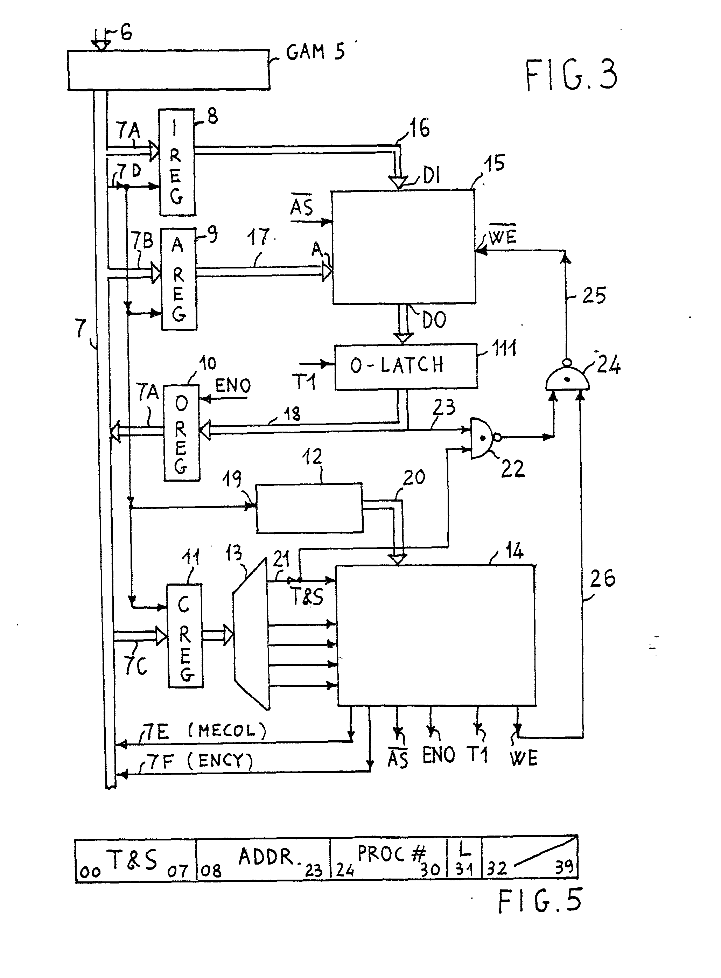

Figure 3 shows in block form a preferred embodiment of the memory organized according to the invention.

As already stated with reference to figure 1, memory 4 communicates with bus 6 through a block named GAM 5 which has the sole function of settling the conflicts among processor for the access to bus 6 and memory.

A detailed description of GAM 5 is completely unuseful for understanding the invention; anyway it can be found in the already mentioned Patent Application N. 27787 A/79.

For the invention purpose it can be noted that bus 6 extends practically farther GAM 5 in a bus 7 directly connected to memory 4; on such bus 7 only a memory access request at a time, coming from the several processors, is present.

Bus 7 comprises a plurality of lead groups designed to transfer particular kinds of information.

A first lead group 7A is designed to transfer data between processors and memory.

A second lead group 7B is designed to transfer a memory address from processors to memory.

A third lead group 7C is designed to transfer a command code from processors to memory.

A bus lead 7D is used to send a memory cycle activation signal to memory.

Two leads 7E and 7F are used to send two timing signals from memory towards the processors.

Memory 4 comprises some interface registers 8, 9, 10, 11 and internal register 111, a timing signal generator 12, a command code decoder 13, a command timing signal generator 14 and a memory block 15.

Register 8 (I REG) constitutes a register for the input data to be written into the memory block.

Its inputs are connected to lead group 7A of bus 7 and its outputs are connected through channel 16 to inputs DI of the memory block.

Register 9 (A REG) is designed to receive the memory address and has its inputs connected to lead group 7B and its outputs connected, through channel 17, to addressing inputs A of the memory block.

Register 10 (O REG) is designed to receive the data read out from memory and to transfer them on bus 7.

Its outputs are connected to lead group 7A and its inputs are connected, through channel 18, to outputs of memory output register 111.

This last one has its inputs connected to outputs DO of the memory block.

Register 11 (C REG) is designed to receive the command code present on lead group 7C.

Its outputs are connected to inputs of decoder 13.

Register 8, 9, 11 have a clock input connected to lead 7D.

Lead 7D is also connected to enabling input 19 of timing signal generator 12.

A signal switching from logical level 1 to logical level 0 on enabling lead 7D causes the loading of registers 8, 9, 11 and the enabling of generator 12.

Generator 12 produces a timing signal train given out on an output lead group 20.

Generators such as generator 12 are well known in the prior art and

detailed explanations are not therefore essential on this matter.

An embodiment example of generator 12 is described in Italian Patent Application n. 31170 A/77, filed by the same assignee on December 23, 1977.

The timing signals produced by generator 12 are applied to a first input group of network 14.

Network 14 receives on a second input group the command decoding signal generated by decoder 13 and, through AND/OR logical combinations among such signals, generates at its outputs a set of command signals suitably timed and essential for handling the memory working according to the received command code.

In the mentioned patent application N. 31170 A/77 a preferred embodiment of command timing network, which can be used without any changing in the above described memory, is described in detail.

Reference is made to such document for any realization detail which is beyond the present invention purpose.

For understanding the present invention, it is enough to state that among the several signals produced by network 14 there is a signal ENO enabling the loading of register 10, a signal T1 enabling the loading of register 111, a signal WE enabling the memory block writing and a signal $\overline{AS}$ enabling the memory block addressing.

Other signals will be considered later on.

Memory block 15 can be constituted by a plurality of integrated circuits, produced by the U.S. Firm MOSTEK with code MK 4116.

The specifications published by the producer supply with all technical details for using such circuits.

For understanding the invention it is enough to state that a memory block carried out by means of such circuits has some data inputs DI, some address inputs A, some data outputs DO, a clock signal input $\overline{AS}$ and a command signal input $\overline{WE}$.

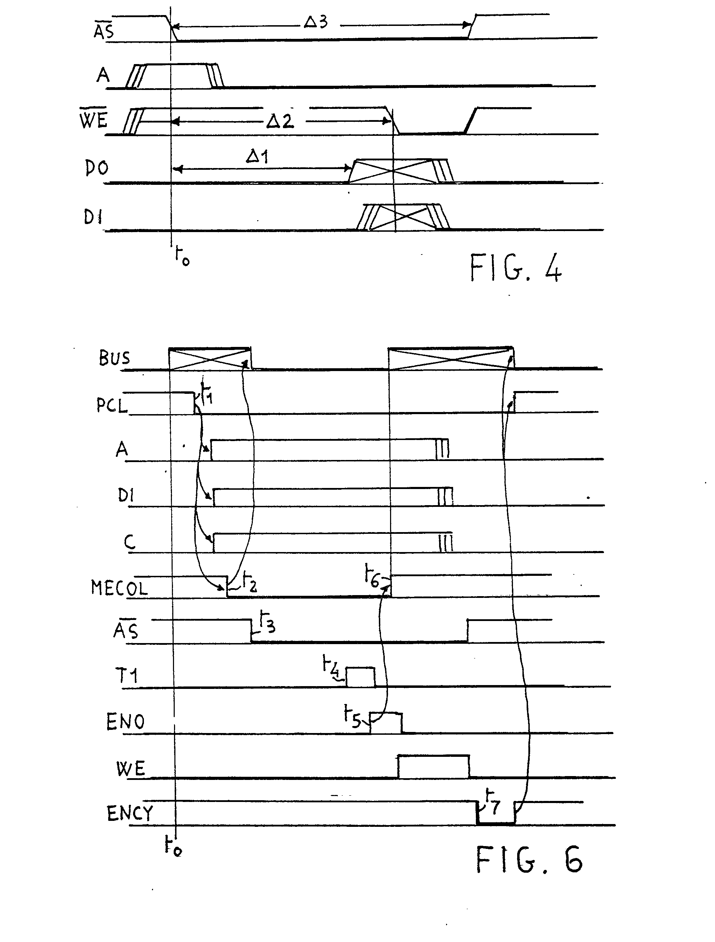

Figure 4 shows in a timing diagram the memory block behaviour in a combined read/write operation.

The block enabling is caused by the switching from 1 to 0 (time $t_0$) of the logical level at input $\overline{AS}$ (diagram $\overline{AS}$).

At time $t_0$ a memory address must be steadly present at inputs A and a signal at logical level 1 at the input $\overline{WE}$ (diagram A and $\overline{WE}$).

After a certain time $\triangle 1$, the information read out from memory appears at outputs DO.

After a certain time $\triangle 2$ from $t_0$, the signal applied to input $\overline{WE}$ must be lowered to logical level 0.

Such switching causes the writing in memory of the information present at inputs DI, which at such instant must be steadly present at the in puts (diagram DI).

After a certain time $\triangle 3$, the signal at input $\overline{WE}$ can rise again to 1 as well as signal $\overline{AS}$.

The suitable timing of the information and of the signals is determined by network 14.

It is to be noted that the write operation is determined by the switching from 1 to 0 of signal at input $\overline{WE}$.

Lacking such switching the write operation does not occur.

It is also to be noted that $\triangle 1 < \triangle 2$, that is the data read out from memory can be loaded into register 11 before the write operation takes place.

The above described memory organization is quite conventional.

Now, the new aspects of the present invention will be considered.

As already said, decoder 13 decodes the command code received at its inputs and produces a signal, for instance at logical level 1, on one of its output leads, such signal corresponding to the particular deco ded command.

So for the TEST & SET operation decoder 13 will generate a signal at logical level 1 on output lead 21.

Such lead is connected both to network 14 and to first input of a two input NAND gate 22.

The second input of NAND 22 is connected, through lead 23, to an output of register 11 corresponding to bit 07 of such register.

Output of NAND 22 is connected to a first input of a second two input NAND 24.

The second input of NAND 24 receives, through lead 26, the command signal WE generated by network 14.

The output of NAND 24 is connected, through lead 25, to read/write command input $\overline{\text{WE}}$ of memory block 15.

It is clear that, if a TEST & SET operation is commanded and bit 07 read out by such operation is already at logical level 1, both inputs of NAND 22 are at logical level 0 and output of NAND 24 is at logical level 1 independently from the logical level of command signal WE.

Therefore a signal at logical level 1 is applied to input R/W of block memory.

Such signal inhibits the write operation.

Figure 5 shows the format of a conditioned T&S instruction according to the invention.

The instruction comprises a first field, for instance of 8 bits numbered from 00 to 07, which includes a binary command code, that is the T & S command.

A second instruction field, for instance of 16 bits numbered from 08 to 23, includes a binary code of memory address.

A third field, for instance of 16 bits numbered from 24 to 39, includes in a first zone (bits from 24 to 30) the code of the processor emitting the TEST & SET instruction and in bit 31 a locking information L.

A second zone of the T & S instruction (bits from 32 to 39) may remain unused and without meaning or may include other useful information, for instance a program name or code, within which the resource occupation is required, or also some redundant bits for the lock bit.

After the description of the memory circuits which carry out the invention and the format of the conditioned TEST & SET instruction, it is now possible to show in detail the development in the time of the TEST & SET operation with reference to the timing diagram of figure 6 and to the architecture of figure 3.

At an initial time $t_0$ the processor N, which wants to command a TEST & SET operation and has obtained bus access from GAM 5, puts on the bus the information set given by T & S instruction (BUS diagram of figure 6).

Therefore command code of T & S instruction will be present on lead group 7C, address code will be present on lead group 7B, processor name and lock bit L will be present on lead group 7A.

At a time $t_1$ the processor N will be able to send a timing and memory enabling signal.

Such signal is suitably constituted by the falling edge of logical level 1 previously applied to lead 7D (PCL diagram).

With the reception of such signal the information present on bus 7 is loaded into registers 8, 9, 11 and is therefore available at the output of the same registers (A, DI, C diagrams which shows the information validity respectively at the outputs of registers 9, 8, 11).

At the same time timing unit 12 is enabled and a signal train is applied to network 14 which also receives on lead 21 signal T & S.

Therefore at the outputs of network 14 a set of timed command signals appears.

A first emitted signal is MECOL which goes from logical level 1 to logical level 0; such signal is transferred, through lead 7E, on the bus and informs that data, commands, addresses put on the bus by processor N can be removed (time $t_2$).

The chaining arrow from MECOL diagram to BUS diagram shows such action. On the other hand, once registers 8, 9, 11 have been loaded, the information contained into them stays and is applied to memory inputs A, DI and to decoder inputs respectively.

A second emitted signal is the "strobe" signal for the memory block ($\overline{AS}$ diagram, time $t_3$).

A third emitted signal is a pulse $T_1$ of register 111 loading ($T_1$ diagram, time $t_4$).

From now on NAND 22 receives on its inputs the logical level corresponding to read out lock bit L and TEST & SET decoding signal respectively.

A fourth emitted signal is a pulse ENO for register 10 loading (ENO diagram, time $t_5$) followed (time $t_6$) by the raising of signal MECOL on lead 7E for indicating to processor N that the information read out from memory is available on bus 7.

A fifth emitted signal is a writing pulse WE (WE diagram).

It is clear that such pulse is transferred in negated form to block 15 through NAND 24 only if bit L applied to an input of NAND 22 is at logical level 0.

In other words the described network really conditions the write operation during a T & S instruction execution.

A last emitted signal (time $t_7$) in ENCY, which signals through lead 7F the memory cycle end and the bus release.

Once described the specifications of TEST & SET instruction conditioned according to the invention, it is now possible to examin how such type of instruction may be used by a processor in a multiprocessor system to avoid system dead locks due to lack of common resource release.

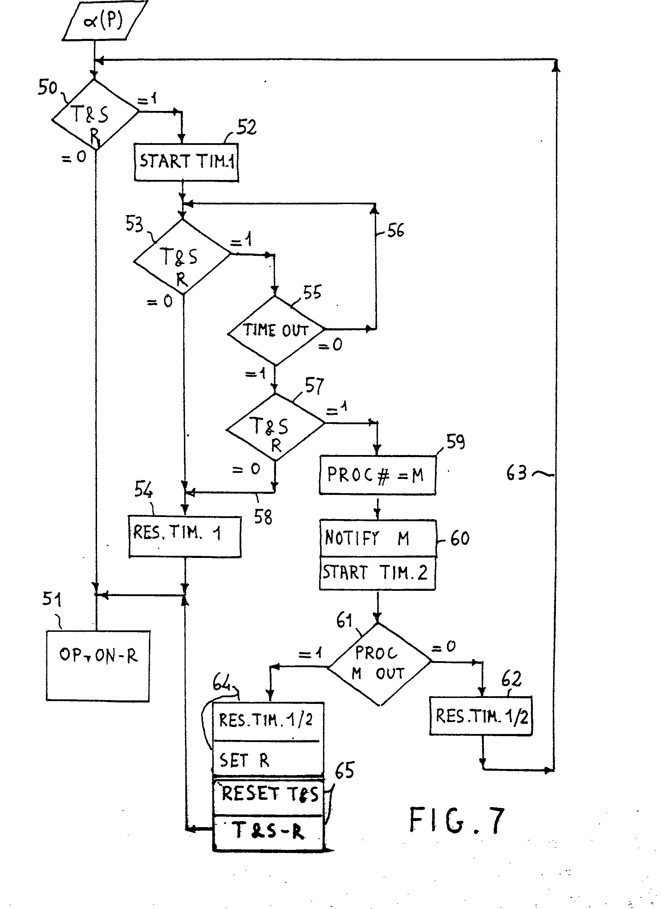

Figure 7 is a flow diagram of a preferred control process which uses the Conditioned T & S instruction.

Assumption is made that a processor P wants to access some common resources R starting from a certain point of the development of a program identified with $\alpha$ (P).

Processor P commands therefore the conditioned TEST & SET operation on resources R (logic block 50: T & S-R) verifying whether such operation had a positive result (=0) or not (= 1 ).

In case of positive result processor P accesses the resources and operates on them (operating logic block 51: OP - ON - R).

Contrarily, and that means the resources are occuped by another processor M, it activates a timer (logic block 52: START TIM 1) and tries again the conditioned TEST & SET operation (logic block 53).

If this time the operation has a positive result, processor P resets the timer (logic block 54: RES. TIME 1), accesses the resources and operates on them (logic block 51).

In case the operation has still a negative result, processor P checks the timer status for verifying if a certain time limit is expired (logic block 55: TIME OUT).

If the time limit is not expired yet (TIME OUT=0), processor P cyclically tries again the TEST & SET operation coming back (path 56) to block 53.

Once the time limit expires (TIME OUT = 1), processor P tries again the TEST & SET operation (block 57).

If this time the operation obtains a positive result, processor P goes (path 58) to block 54 and from here to block 51.

In case the operation obtains negative result, processor P detects that the name of the processor occupying resources R is M (block 59). It therefore sends a message to processor M asking for its working status (block 60: NOTIFY) and starts a second timer (block 61: START TIME 2).

Then it processes the answer of processor M (block 61).

If processor M answers it is on that is it not off duty, processor P resets the two timers (block 62) and tries again a TEST & SET operation, coming back to logic block 50 through path 63.

If processor M answers to be off duty or it does not answer at all within a time limit imposed by the timer (TIMER 2), that means it is completely off duty and it is able neither to answer, processor P ar ranges the previously occuped resources R in a known state (block 64) according to the received information and to the type of resource to which it has to access.

Then finally it access these resources with a first RESET T & S command which sets at 0 the content of the first address of the resources (block 65) followed by a conditioned T & S command by which it writes in the first word of the resources R its own name P and the lock bit L.

The described flow diagram shows only a preferred process which uses the possibilities offered by the conditioned T & S instruction for de tecting the busy status of resources and for arranging their release in case the occupaying processor is off duty.

It is however clear that other processes can be used without departing from the invention purposes.

For instance, in a second preferred process, a processor can assume the master rôle and periodically verify the status of the several system processors by means of a so-called "polling" procedure well known to people skilled in the art.

If a processor is found off duty, the master processor is able through simple read operations to verify the status of all common resources, to identify the ones which are occuped by the off duty processor and then to arrange their release.

Claims

1. A method for releasing common memory resources in a multiproces sor system comprising a plurality of processors and a memory unit having at least a common resource shareable by all the processors, comprising the setting busy of said resource by a first occupying processor through the storing in a memory position related to said resource of a first information of busy state of said common resource and a second information which identifies the occupying processor, and comprising further:
- the reading by a second processor of said first and second information,
- the interrogation by said second processor of said first processor to detect its active/inactive state,
- and the cancellation of said first and second information if said first processor is detected as being inactive.

2. A method for releasing common memory resources in a multiproces sor system comprising a plurality of processors and a memory unit having at least a common resource shareable by all the processors, comprising the setting busy of said resource by a first occupying processor through the storing in a memory position related to the common resource, of a first information of busy state of said common resource and a second information which identifies the occupying processor, and comprising further:
- the interrogation by a second processor of the other processors to detect their active/inactive state,
- the reading by said second processor of said first and second information, if any of the other processors is detected as inactive,
- the cancellation of said first and second information by said second processor, if said second information identifies a processor which has been detected as inactive by said second processor.

$-\dfrac{1}{4}-$

FIG. 1

FIG. 2

FIG.3

| 00 T&S 07 | 08 ADDR. 23 | 24 PROC # 30 | L 31 | 32      39 |
|---|---|---|---|---|

FIG.5

FIG. 4

FIG. 6

0033915

−4/4−

FIG.7

## DOCUMENTS CONSIDERED TO BE RELEVANT

| Category | Citation of document with indication. where appropriate, of relevant passages | Relevant to claim |
|---|---|---|
| X | IBM TECHNICAL DISCLOSURE BULLETIN, vol. 7, no. 8, January 1965, pages 671-675 NEW YORK (US) ROBELEN et al.: "Instruction for Restricting Memory in a Shared Memory Multicomputing System" <br><br> * Page 672, last paragraph to page 675, second paragraph and figure * | 1,2 |
| | IEEE TRANSACTIONS ON ELECTRONIC COMPUTERS, vol. EC-16, no. 3, June 1967, pages 320-326 RODER et al.: "Memory Protection in Multiprocessing Systems" <br><br> * Page 324, left-hand column, line 23 to page 326, left-hand column, third paragraph and figure 2 * | 1,2 |

**CLASSIFICATION OF THE APPLICATION (Int Cl.³)**

G 06 F 13/00

**TECHNICAL FIELDS SEARCHED (Int. Cl.³)**

G 06 F 13/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22.05.1981 | WEBER |

EPO Form 1503.1   06.78